# EUROPÄISCHE PATENTSCHRIFT

(11) **EP 0 906 520 B1**
(45) Veröffentlichungstag und Bekanntmachung des Hinweises auf die Patenterteilung: **11.09.2002**
(21) Anmeldenummer: 97929210.9
(22) Anmeldetag: 18.06.1997
(51) Int. Cl.: F16D 11/10

(54) **KUPPLUNGSVERZAHNUNG IN EINEM SCHALTGETRIEBE**
COUPLING TOOTHING IN A GEARBOX
DENTURE D'ACCOUPLEMENT DANS UNE BOITE DE VITESSES

(30) Priorität: 21.06.1996 DE 19624774
(43) Veröffentlichungstag der Anmeldung: 07.04.1999
(73) Patentinhaber: BLW PRÄZISIONSSCHMIEDE GmbH, 80807 München (DE)
(72) Erfinder: GUTMANN, Peter, D-81927 München (DE); TAUSCHEK, Georg, D-81885 München (DE)
(74) Vertreter: Grättinger & Partner (GbR)
(86) Internationale Anmeldenummer: EP9703173
(87) Internationale Veröffentlichungsnummer: WO97049932

(56) Entgegenhaltungen:
- DE-A- 19 514 349
- DK-C- 52 150
- GB-A- 2 081 822
- US-A- 3 550 738
- PATENT ABSTRACTS OF JAPAN vol. 008, no. 182 (M-319), 22.August 1984 & JP 59 073627 A (SANSHIN KOGYO KK;OTHERS: 01), 25.April 1984,

## Beschreibung

Die Erfindung betrifft eine Kupplungsverzahnung in einem Schaltgetriebe zwischen zwei miteinander kuppelbaren rotationssymmetrischen Kupplungskörpern bzw. ein Schaltgetriebe mit derartigen Kupplungskörpern.

Bei einer bekannten Kupplungsverzahnung (EP 0073985 B1) für eine Schaltkupplung eines Motorradgetriebes besitzt einer der beiden Kupplungskörper gegenüber einer Grundfläche vorspringende Klauen, der andere Taschen, in welche die Klauen beim Herstellen der Antriebsverbindung eingreifen. Klauen und Taschen sind dabei mit hinterstellten Kupplungsflächen ausgebildet, d.h. die die Kupplung bewirkenden Flanken der Klauen bzw. Taschen sind um mehrere Winkelgrade in Richtung ihrer Tiefe nach innen geneigt. Infolge der gleichartigen Neigung zweier zusammenwirkender Kupplungsflächen ergibt sich ein Kupplungseingriff, bei dem ein Lösen unter Last vermieden wird.

Bekannt ist ferner eine Kupplungsverzahnung bzw. ein Schaltgetriebe mit Kupplungsverzahnung gemäß Dokument DK-52150, wobei die beiden Kupplungskörper auf ihren einander zugekehrten Seiten axial aus der Grundfläche vorspringende Klauen aufweisen; die Klauen des Gangrads sind hier zusätzlich an die innere Umfangsfläche eines die Grundfläche begrenzenden Außenbunds angesetzt.

Der vorliegenden Erfindung liegt demgegenüber die Aufgabe zugrunde, die bekannte Kupplungsverzahnung derart zu verbessern, daß sie auch für die Übertragung hoher Drehmomente geeignet ist, sich aber dennoch leicht schalten läßt.

Zur Lösung dieser Aufgabe sind erfindungsgemäß die Merkmale a bis d in Patentanspruch 1 vorgesehen. Demzufolge besitzen beide Kupplungskörper gegenüber einer Grundfläche in axialer Richtung vorspringende, jeweils zweiseitig angebundene Klauen, welche ein leichtes Einspuren gewährleisten, zumal Teilung bzw. Klauenabstand frei wählbar sind, d.h. in der Praxis nach optimalen Eingriffsbedingungen gestaltbar sind.

Eine besonders hohe Festigkeit der Kupplungskörper wird dadurch erzielt, daß der eine einen Außenbund, der andere einen Innenbund aufweist, an welchen die jeweiligen Klauen zusätzlich zu ihrer Verbindung mit der Grundfläche angesetzt sind.

Dadurch, daß keiner der Kupplungskörper Kupplungsflächen aufweist, die in taschenartige Vertiefungen eingeformt sind, statt dessen nur Kupplungsflächen an allenfalls zweiseitig angebundenen Klauen vorgesehen sind, ergibt sich ein insgesamt geringer Herstellungsaufwand zugunsten der erfindungsgemäßen Kupplungsverzahnung. In diesem Zusammenhang ist von Bedeutung, daß bei der Herstellung der gemäß Merkmal d) hinterstellten Klauen das in EP 0073985 B1 beschriebene rationelle Umformverfahren, welches lediglich aus einem Vorschmiede- und einem Kaltkalibrierschritt besteht, anwendbar ist.

Da die beiden Kupplungskörper mit ihren Klauen ineinandergreifen, ist es im Sinne einer Reduzierung der axialen Baulänge des Schaltgetriebes zweckmäßig, daß der Außenbund, bezogen auf die Grundfläche, höher ist als die Klauen und daß der Innenbund, bezogen auf die Grundfläche, niedriger ist als die Klauen. Die an den Innenbund angesetzten Klauen können dabei vorteilhaft in der Höhe gestuft ausgebildet sein, wobei die radial innere Stufe etwa die Höhe des Innenbunds aufweist.

Zur zusätzlichen Verbesserung der Schaltfunktion kann nach einer weiteren Ausgestaltung vorgesehen sein, daß eine Teilmenge der Klauen eines der beiden Kupplungskörper von dessen übrigen Klauen geringfügig in der Höhe abweicht; bei Kupplungskörpern mit geradzahliger Klauenzahl ist hierbei zweckmäßig, daß die Klauen eines der beiden Kupplungskörper abwechselnd nach zwei unterschiedlichen Höhen bemessen sind. Auf diese Weise wird die maximale dachseitige Kontaktfläche der Klauen beim Schaltvorgang reduziert, so daß die Klauen leichter ineinandergleiten.

Das Einspuren kann nach einem weiteren erfindungsgemäßen Vorschlag noch dadurch verbessert werden, daß die Klauen wenigstens eines Kupplungskörpers eine seitlich abgeschrägte, insbesondere in Umfangsrichtung gewölbte Dachform aufweisen, derart, daß während der Einspurphase die axial aufeinandertreffenden Dachformen Linienberührung haben.

Die Festigkeit der Kupplungskörper läßt sich noch weiter dadurch steigern, daß der erste Kupplungskörper neben einem Außenbund noch einen mit Abstand von den Klauen angeordneten Innenbund aufweist und daß der zweite Kupplungskörper neben einem Innenbund noch einen mit Abstand von den Klauen angeordneten Außenbund aufweist.

Für die Übertragung besonders hoher Drehmomente bei verbesserter Standfestigkeit ist eine derartige Gestaltung der Klauen vorteilhaft, daß die beiden Kupplungskörper im gekuppelten Zustand mit den tragenden Seitenflanken ihrer Klauen flächig aneinanderliegen.

In Anwendung der erfindungsgemäßen Lehre auf ein Schaltgetriebe kann es wiederum im Interesse einer Reduzierung der axialen Baulänge zweckmäßig sein, einerseits die Gangräder gemäß Merkmal b in Anspruch 1 mit einem die Grundfläche begrenzenden Außenbund zu versehen, an welchen radial nach innen hin die Klauen angesetzt sind, und andererseits die Schiebemuffe gemäß Merkmal c in Anspruch 1 derart auszubilden, daß die Klauen an die äußere Umfangsfläche eines die Grundfläche begrenzenden Innenbunds angesetzt sind. Die Schiebemuffe, welche einen kleineren Durchmesser hat als die Gangräder, kann dadurch einen größeren Schaltweg bewältigen, daß sie mit ihrem Außenring teilweise in die entsprechend eingesenkte Stirnfläche des benachbarten Gangrads eintritt.

Im folgenden werden Ausführungsbeispiele der Erfindung anhand der Zeichnung beschrieben. Es zeigt
- Fig. 1: die perspektivische Ansicht eines sektorartigen Abschnitts einer Schiebemuffe,
- Fig. 2: die perspektivische Ansicht eines sektorartigen Abschnitts eines Gangrads,
- Fig. 3: eine Variante zu Fig. 2 mit seitlich abgeschrägter Dachform,
- Fig. 4: eine Variante zu Fig. 2 mit gewölbter Dachform,
- Fig. 5: einen Axialschnitt durch einen Abschnitt der Antriebswelle eines Schaltgetriebes mit zwei Gangrädern und einer dazwischen gelagerten Schaltmuffe,
- Fig. 6: eine Ansicht gemäß Fig. 5, wobei der erste Gang eingeschaltet ist und
- Fig. 7: eine Ansicht gemäß Fig. 5, wobei der zweite Gang eingeschaltet ist.

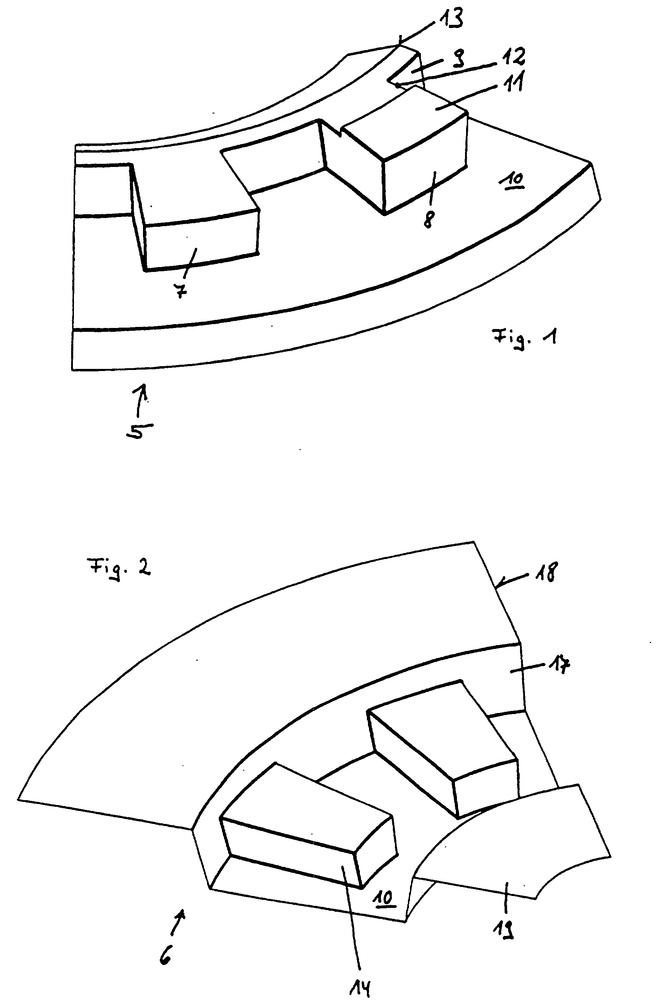

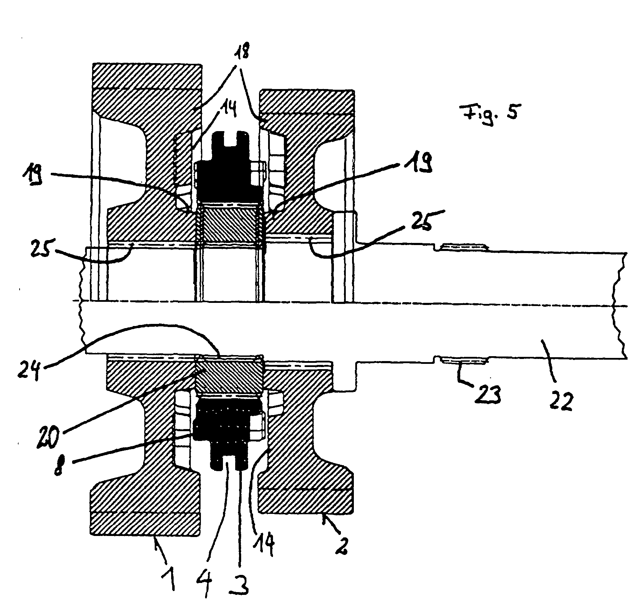

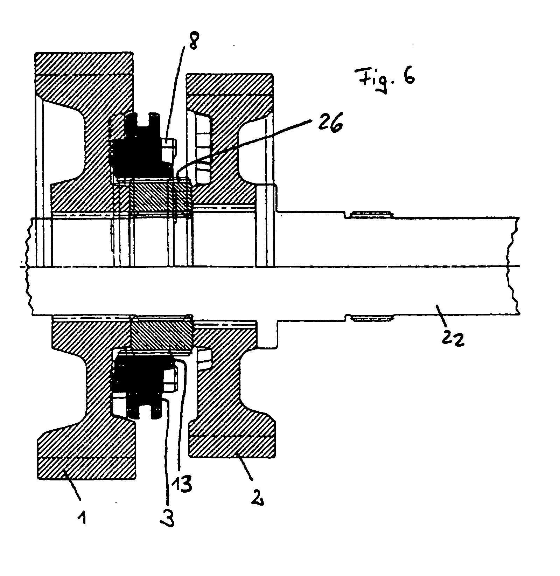

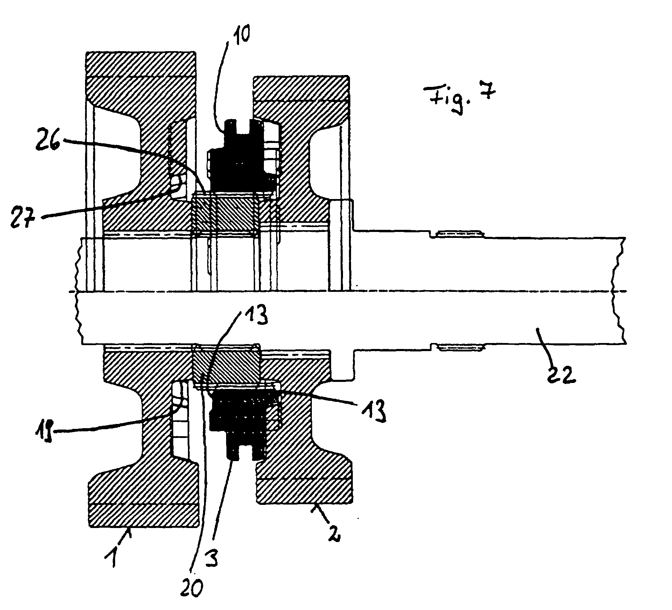

Ein Schaltgetriebe ist beispielhaft dargestellt in den Fig. 5 bis 7, und zwar mit Beschränkung auf das Gangrad 1 für den ersten Gang, das Gangrad 2 für den zweiten Gang und eine dazwischen angeordnete Schaltmuffe 3. Dabei bildet die Schaltmuffe 3 eine Kupplungsverzahnung entweder zusammen mit dem Gangrad/1. Gang 1 oder mit dem Gangrad/2. Gang 2, je nachdem, ob die Schaltmuffe 3, mittels einer nicht dargestellten Schaltgabel, welche in die Nut 4 der Schaltmuffe 3 eingreift, nach links oder nach rechts in die jeweilige Eingriffsposition geschoben wird. Die linke Eingriffsposition, d.h. die Angriffsverbindung mit dem Gangrad/1 Gang 1 ist in Fig. 6 dargestellt, die rechte Eingriffsposition, d.h. mit dem Gangrad/2. Gang 2 ist in Fig. 7 dargestellt. In beiden Fällen bildet die Schaltmuffe im Rahmen der jeweils geschalteten Kupplungsverzahnung einen Kupplungskörper 5, wie er beispielhaft in Fig. 1 dargestellt ist, während das jeweilige Gangrand einen weiteren Kupplungskörper 6 bildet, wie er in drei verschiedenen Varianten in den Fig. 2 bis 4 dargestellt ist.

Der Kupplungskörper 5 gemäß Fig. 1 besitzt Klauen 7, 8, welche an einer inneren Umfangsfläche 9 angesetzt sind und im übrigen auf einer Grundfläche 10 angebunden sind. Der in Fig. 1 perspektivisch dargestellte Sektor des Kupplungskörpers 5 entspricht einer der beiden auf der Schiebemuffe 3 vorhandenen Klauenverzahnungen. Die aufeinanderfolgenden Klauen 7, 8 sind unterschiedlich hoch ausgebildet, wobei die Klaue 7 der Höhe der Umfangsfläche 9 bzw. eines sie ausbildenden Innenbunds 13 entspricht, während die Klaue 8 in der Höhe gestuft ausgebildet ist, wobei eine radial äußere Stufe 11 höher ausgebildet ist verglichen mit einer radial inneren Stufe 12; letztere verläuft bündig mit der Stirnseite des Innenbunds 13.

Bei dem in Fig. 1 dargestellten "zweiten" Kupplungskörper können die Klauen bei geradzahliger Klauenzahl entweder abwechselnd nach zwei unterschiedlichen Höhen bemessen sein oder auch untereinander gleich ausgebildet sein. Durch Klauen mit unterschiedlichen Höhen wird die momentane Stützfläche bei der ersten Berührung der Klauen beider Kupplungskörper während des Einspurvorgangs verringert, so daß das Einspuren erleichtert wird.

Die Fig. 2 bis 4 zeigen jeweils eine Ausführungsform eines "ersten" Kupplungskörpers 6, der somit die Gegenverzahnung zum "zweiten" Kupplungskörper 5 gemäß Fig. 1 bildet. Beim ersten Kupplungskörper 6 sind die Klauen 14, 15, 16 an der inneren Umfangsfläche 17 eines die Grundfläche 10 begrenzenden Außenbunds 18 angesetzt. Der Außenbund 18 ist, bezogen auf die Grundfläche 10, höher ausgebildet als die Klauen 14, 15, 16. Neben dem Außenbund 18 besitzt der erste Kupplungskörper noch einen mit Abstand von den Klauen 14, 15, 16 angeordneten Innenbund 19. Die zeichnerische Darstellung beschränkt sich lediglich auf die Wiedergabe der äußeren Formgebung, also der Oberfläche des dargestellten sektoralen Abschnitts einer Klauenverzahnung als Teil einer Kupplungsverzahnung. Eine derartige Klauenverzahnung ist mit Bezugnahme auf das Schaltgetriebe gemäß den Fig. 5 bis 7 jeweils auf der der Schaltmuffe zugewandten Seite der beiden Gangräder 1, 2, vorhanden. Wenn also die Schaltmuffe 3 auf dem sie tragenden Zwischenkörper 20 axial in Richtung eines der beiden benachbarten Gangräder 1, 2 verschoben wird, so greifen die dem gewählten Verzahnungspartner zugewandten Klauen 7, 8 der Schaltmuffe 3 zwischen die Klauen 14, 15, 16 der Klauenverzahnung des jeweiligen Gangrads, welche nach dem Einkuppeln mit der zugeordneten Klauenverzahnung der Schaltmuffe 3 eine Kupplungsverzahnung bildet.

Die Ausführungsformen gemäß den Fig. 2 bis 4 unterscheiden sich durch ihre unterschiedliche Klauenform.

Gemäß Fig. 2 weist der Kupplungskörper 6 Klauen 14 auf, deren Dachfläche eben ausgebildet ist.

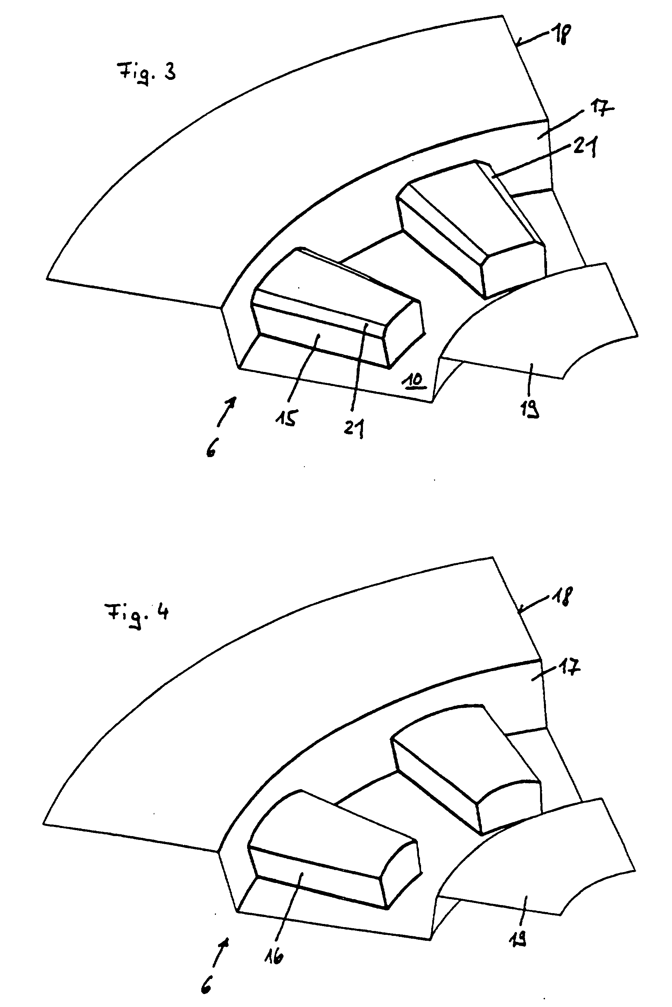

Gemäß Fig. 3 besitzt der Kupplungskörper 6 Klauen 15, deren Dachform seitliche Abschrägungen 21 aufweist.

Gemäß Fig. 4 besitzt der Kupplungskörper 6 Klauen 16 mit in Umfangsrichtung gewölbter Dachform. Gegenüber der ebenen Dachform (Fig. 2) erleichtern deren Varianten mit seitlichen Abschrägungen 21 (Fig. 3) und gewölbter Dachform (Fig. 4) das Einspuren der in axialer Richtung aufeinandertreffenden Klauenverzahnungen.

Zu den Fig. 1 bis 4 wurde aus Gründen der Zeichnungsvereinfachung darauf verzichtet, die Seitenflanken der Klauen 7, 8, 14, 15, 16 mit der bei derartigen Kupplungsverzahnungen üblichen Hinterstellung zu zeichnen. Sie bedeutet, daß die Dachfläche der Klauen in Umfangsrichtung gemessen breiter ist als deren Grundfläche, d.h. die Seitenflanken sind von der Dachfläche zur Grundfläche hin geringfügig, d.h. um bis zu 5 Winkelgrade, nach innen geneigt, so daß sie sich nach dem Einspuren ineinander verkeilen; ein Lösen des Verzahnungseingriffs unter Last wird somit zuverlässig vermieden. Da unter Last die entsprechenden Seitenflanken der Klauen aneinanderliegen, ist es zur Verschleißbegrenzung zweckmäßig, diese Seitenflanken so auszubilden, daß sie im Eingriffsfall Flächenberührung haben. Das gleiche Kriterium gilt selbstverständlich nicht für die Einspurphase, während der die axialen Außenflächen der Kupplungskörper kurzzeitig aufeinander treffen; hier ist bei der Ausbildung der Dachform der Klauen darauf zu achten, daß möglichst nur eine die Reibungskräfte begrenzende Linienberührung zwischen den in axialer Richtung zusammenbewegten Klauen gegeben ist. Diesem Umstand wird durch die seitlichen Abschrägungen 21 der Klauen 15 gemäß Fig. 3 und noch vollkommener durch die gewölbte Dachform der Klauen 16 gemäß Fig. 4 Rechnung getragen.

Bei dem abschnittsweise dargestellten Schaltgetriebe gemäß den Fig. 5 bis 7 sind nur die Gangräder für den ersten Gang 1 und den zweiten Gang 2 dargestellt. Die Abtriebswelle 22, auf der sie gelagert sind, ist beidseitig abgeschnitten; auf ihrem rechten Abschnitt erkennt man eine Keilverzahnung 23 für eine weitere, nicht dargestellte Schiebemuffe zwischen den ebensowenig dargestellten Gangrädern für den dritten und vierten Gang.

Die beiden dargestellten Gangräder für den ersten und zweiten Gang 1 und 2 besitzen jeweils an ihrem Außenumfang einen Außenbund 18 sowie einen mit Abstand von den Klauen angeordneten Innenbund 19, wie in den Fig. 2 bis 4 jeweils schematisch dargestellt. In der Schnittdarstellung der beiden Gangräder erkennt man jeweils eine Klaue 14 mit ebener Dachform, ebenfalls in Schnittdarstellung. Für die Klauenverzahnung auf seiten der Schaltmuffe 3 wurden Klauen 8 mit gestufter Ausführung gemäß der rechten Darstellung in Fig. 1 gewählt. Die Schiebemuffe 3 sitzt auf einem Zwischenkörper 20, welcher über eine Keilverzahnung 24 mit der Abtriebswelle 22 verbunden ist. Die ständig mitlaufenden Gangräder 1, 2 sitzen zweckmäßig auf Nadellagern 25. Das Einkuppeln eines Gangrads erfolgt in der Weise, daß die Schaltmuffe 3 auf ihrem Schiebesitz 26 mit dem Zwischenkörper 20 aus ihrer neutralen Mittelstellung gemäß Fig. 5 in axialer Richtung verschoben wird, entweder nach links zum Herstellen einer Kupplungsverzahnung mit dem Gangrad/1. Gang 1 (Fig. 6) oder nach rechts zum Herstellen einer Kupplungsverzahnung mit dem Gangrad/2. Gang 2 (Fig. 7).

In der Kupplungsstellung der Kupplungskörper gemäß den Fig. 6 und 7 erkennt man, daß die Schiebemuffe 3 mit ihrer dem jeweiligen Gangrad zugewandten Grundfläche 10 in einen entsprechenden Ausschnitt des Gangrads eintritt, wobei die gegenseitigen Klauen ineinandergreifen und der Innenbund 13 der Schiebemuffe in den Zwischenraum zwischen den freien Stirnseiten 27 der Klauen 14 und dem Innenbund 19 des jeweiligen Gangrads eintreten. Auf diese Weise ist eine in axialer Richtung gedrängt bauende Kupplungsverzahnung verwirklicht.

## Patentansprüche

1. Kupplungsverzahnung in einem Schaltgetriebe zwischen zwei miteinander kuppelbaren rotationssymmetrischen Kupplungskörpern (5, 6) und folgenden weiteren Merkmalen:
a) beide Kupplungskörper (5, 6) weisen auf ihren einander zugekehrten Seiten Klauen auf, welche aus einer Grundfläche (10) axial vorspringen;
b) bei einem ersten der beiden Kupplungskörper (6) sind die Klauen (14, 15, 16) an die innere Umfangsfläche (17) eines die Grundfläche (10) begrenzenden Außenbundes (18) angesetzt;
c) bei dem zweiten der beiden Kupplungskörper (5) sind die Klauen (7, 8) an die äußere Umfangsfläche (9) eines die Grundfläche (10) begrenzenden Innenbundes (13) angesetzt;
d) die Kupplungsflächen beider Klauen sind jeweils mit Hinterstellung ausgebildet.

2. Kupplungsverzahnung nach Anspruch 1,
**dadurch gekennzeichnet,**
**daß** der Außenbund (18), bezogen auf die Grundfläche (10), höher ist als die Klauen (14, 15, 16).

3. Kupplungsverzahnung nach Anspruch 1,
**dadurch gekennzeichnet,**
**daß** der Innenbund (13), bezogen auf die Grundfläche (10), niedriger ist als die Klauen (7, 8).

4. Kupplungsverzahnung nach Anspruch 3,
**dadurch gekennzeichnet,**
**daß** die Klauen (7, 8) in der Höhe gestuft ausgebildet sind, wobei die radial innere Stufe (12) etwa die Höhe des Innenbunds (13) aufweist.

5. Kupplungsverzahnung nach Anspruch 1,
**dadurch gekennzeichnet,**
**daß** eine Teilmenge der Klauen eines der beiden Kupplungskörper von dessen übrigen Klauen geringfügig in der Höhe abweicht.

6. Kupplungsverzahnung nach Anspruch 5,
**dadurch gekennzeichnet,**
**daß** bei Kupplungskörpern mit geradzahliger Klauenzahl die Klauen (7, 8) eines der beiden Kupplungskörper abwechselnd nach zwei unterschiedlichen Höhen bemessen sind.

7. Kupplungsverzahnung nach Anspruch 1,
**dadurch gekennzeichnet,**
**daß** die Klauen (15, 16) wenigstens eines Kupplungskörpers (6) eine seitlich abgeschrägte, insbesondere in Umfangsrichtung gewölbte Dachform aufweisen derart, daß während der Einspurphase die axial aufeinandertreffenden Dachformen Linienberührung haben.

8. Kupplungsverzahnung nach Anspruch 1,
**dadurch gekennzeichnet,**
**daß** die beiden Kupplungskörper (5, 6) im gekuppelten Zustand mit den tragenden Seitenflanken ihrer Klauen flächig aneinanderliegen.

9. Kupplungsverzahnung nach Anspruch 1,
**dadurch gekennzeichnet,**
**daß** der erste Kupplungskörper (6) neben dem Außenbund (18) noch einen mit Abstand von den Klauen angeordneten Innenbund (19) aufweist.

10. Kupplungsverzahnung nach Anspruch 1,
**dadurch gekennzeichnet,**
**daß** der zweite Kupplungskörper (5) neben dem Innenbund (13) noch einen mit Abstand von den Klauen angeordneten Außenbund aufweist.

11. Schaltgetriebe mit einer Kupplungsverzahnung nach Anspruch 1, wobei der erste Kupplungskörper (6) ein Gangrad (1, 2), der zweite (5) eine Schiebemuffe (3) bildet.

## Claims

1. Clutch toothing in a gearbox between two rotationally symmetrical clutch bodies (5, 6) which can be coupled together and have the following further features:
a) both clutch bodies (5, 6) have on their sides facing each other claws axially protruding from a base face (10);
b) in the case of the first of the two clutch bodies (6), the claws (14, 15, 16) are set at the inner circumferencial face (17) of an outer collar (18) delimiting the base face (10);
c) in the case of the second of the two clutch bodies (5), the claws (7, 8) are set at the outer circumferencial face (9) of an inner collar (13) delimiting the base face (10);
d) the clutch faces of both claws are each formed with a relief.

2. Clutch toothing according to Claim 1, **characterised in that** the outer collar (18) is higher than the claws (14, 15, 16) in relation to the base face (10).

3. Clutch toothing according to Claim 1, **characterised in that** the inner collar (13) is lower than the claws (7, 8) in relation to the base face (10).

4. Clutch toothing according to Claim 3, **characterised in that** the claws (7, 8) are stepped in height, the radially inner step (12) being approximately as high as the inner collar (13).

5. Clutch toothing according to Claim 1, **characterised in that** part of the claws of one of the two clutch bodies is slightly different in height from its other claws.

6. Clutch toothing according to Claim 5, **characterised in that** in the case of clutch bodies with an even number of claws, the claws (7, 8) of one of the two clutch bodies have alternately two different heights.

7. Clutch toothing according to Claim 1, **characterised in that** the claws (15, 16) of at least one clutch body (6) have a top with side bevels, in particular convex in the circumferential direction so that there is line contact between the top contours meeting axially during the meshing phase.

8. Clutch toothing according to Claim 1, **characterised in that** the two clutch bodies (5, 6) rest against each other with the faces of the bearing side flanks of their claws.

9. Clutch toothing according to Claim 1, **characterised in that** the first clutch body (6) has also, in addition to the outer collar (18), an inner collar (19) arranged at a distance from the claws.

10. Clutch toothing according to Claim 1, **characterised in that** the second clutch body (5) has also, in addition to the inner collar (13), an outer collar arranged at a distance from the claws.

11. Gearbox with clutch toothing according to Claim 1, whereby the first clutch body (6) is a speed gear (1, 2), and the second one (5) forms a gearshift sleeve (3).

## Revendications

1. Denture d'accouplement dans une boîte de vitesses, entre deux éléments d'accouplement (5, 6), symétriques de révolution, pouvant être couplés l'un à l'autre, présentant les caractéristiques supplémentaires suivantes :
a) les deux éléments d'accouplement (5, 6) présentent sur leurs faces mutuellement en vis-à-vis des griffes qui font saillie dans la direction axiale, sur une surface de base (10) ;
b) sur le premier (6) des deux éléments d'accouplement, les griffes (14, 15, 16) sont disposées contre la surface périphérique intérieure (17) d'un rebord extérieur (18), qui délimite la surface de base (10) ;
c) sur le second (5) des deux éléments d'accouplement, les griffes (7, 8) sont disposées contre la surface périphérique extérieure (9) d'un rebord intérieur (13), qui délimite la surface de base (10) ;
d) les surfaces d'accouplement des deux griffes sont conformées chacune avec une contre-dépouille.

2. Denture d'accouplement selon la revendication 1, **caractérisée en ce que** le rebord extérieur (18), rapporté à la surface de base (10), est plus haut que les griffes (14, 15, 16).

3. Denture d'accouplement selon la revendication 1, **caractérisée en ce que** le rebord intérieur (13), rapporté à la surface de base (10), est moins haut que les griffes (14, 15, 16).

4. Denture d'accouplement selon la revendication 3, **caractérisée en ce que** les griffes (7, 8) sont étagées, le gradin (12) situé radicalement à l'intérieur présentant sensiblement la hauteur du rebord intérieur (13).

5. Denture d'accouplement selon la revendication 1, **caractérisée en ce qu'**une partie des griffes de l'un des deux éléments d'accouplement présente une hauteur légèrement différente de celle des autres griffes.

6. Denture d'accouplement selon la revendication 5, **caractérisée en ce que** dans le cas d'éléments d'accouplement avec un nombre pair de griffes, les griffes (7, 8) de l'un des deux éléments d'accouplement présentent en alternance deux hauteurs différentes.

7. Denture d'accouplement selon la revendication 1, **caractérisée en ce que** les griffes (15, 16) d'au moins un élément d'accouplement (6) présentent une forme de toit chanfreiné sur le côté, en particulier bombé dans la direction périphérique, telle que pendant la phase d'accouplement, les formes de toit qui entrent en contact axialement ont un contact linéaire.

8. Denture d'accouplement selon la revendication 1, **caractérisée en ce que** dans les deux éléments d'accouplement (5, 6), en position accouplée, sont en contact réciproque par les flancs actifs de leurs griffes.

9. Denture d'accouplement selon la revendication 1, **caractérisée en ce que** le premier élément d'accouplement (6) présente, en plus du rebord extérieur (18), un rebord intérieur (19) qui est disposé à distance des griffes.

10. Denture d'accouplement selon la revendication 1, **caractérisée en ce que** le second élément d'accouplement (5) présente, en plus du rebord intérieur (13), un rebord extérieur qui est disposé à distance des griffes.

11. Mécanisme de changement de vitesse avec une denture d'accouplement selon la revendication 1, dans lequel le premier élément d'accouplement (6) est un pignon de vitesse (1, 2) et le second élément d'accouplement (5) est un baladeur (3).
